(19) Europäisches Patentamt
European Patent Office
Office européen des brevets

(11) Veröffentlichungsnummer : **0 111 779**
**B1**

(12) **EUROPÄISCHE PATENTSCHRIFT**

(45) Veröffentlichungstag der Patentschrift : **20.01.88**

(51) Int. Cl.⁴ : **C 09 B 35/38**, C 09 B 31/16, C 09 K 19/60// C09B35/366

(21) Anmeldenummer : **83111885.6**

(22) Anmeldetag : **28.11.83**

(54) **Azofarbstoffe und flüssigkristallines Material enthaltend Azofarbstoffe.**

(30) Priorität : **10.12.82 DE 3245751**

(43) Veröffentlichungstag der Anmeldung : **27.06.84 Patentblatt 84/26**

(45) Bekanntmachung des Hinweises auf die Patenterteilung : **20.01.88 Patentblatt 88/03**

(84) Benannte Vertragsstaaten : **CH DE GB LI**

(56) Entgegenhaltungen :
**EP-A- 0 055 838**
**EP-A- 0 059 166**
**EP-A- 0 067 354**
**EP-A- 0 076 633**
**EP-A- 0 080 153**
**DE-A- 2 627 215**
**FR-A- 2 523 147**
**JP-A-58 111 884**

(73) Patentinhaber : **BAYER AG**
**Konzernverwaltung RP Patentabteilung**
**D-5090 Leverkusen 1 Bayerwerk (DE)**

(72) Erfinder : **Claussen, Uwe, Dr.**
**Carl-Rumpff-Strasse 29**
**D-5090 Leverkusen 1 (DE)**

**EP 0 111 779 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft neue Azofarbstoffe sowie flüssigkristallines Material enthaltend Azofarbstoffe. Das flüssigkristalline Material findet Verwendung in Displays.

Unter Displays werden hier opto-elektronische Anzeigeelemente verstanden, die in der Regel aus zwei parallelen, im Abstande von 5-50 μ angeordneten Platten bestehen, von denen wenigstens eine aus lichtdurchlässigem Material hergestellt ist. An den Innenseiten der Platten werden Elektroden angebracht, der Raum zwischen ihnen ist mit dem farbstoffhaltigen, flüssigkristallinen Material gefüllt. Der Aufbau und die Herstellung der optoelektronischen Anzeige ist bekannt (Kelker, Hatz, Handbook of Liquid Crystals S. 611 ff ; 1980).

Ebenfalls ist bekannt, daß man in das flüssigkristalline Material ausgesuchte Farbstoffe einbetten kann, die den vom äußeren angelegten Feld bewirkten Richtungs- und Ordnungsänderungen des flüssigkristallinen Materials folgen (sog. guest-host-Wechselwirkung). Diese besondere Eigenschaft macht geeignete Farbstoffe selten, wenn man neben den genannten dichroitischen Eigenschaften zusätzlich Echtheiten verlangt, die eine technische Nutzung des Effekts ermöglichen. Wichtige Voraussetzungen hierfür sind die Lichtechtheit, eine ausreichende Löslichkeit und die Verträglichkeit mit anderen Farbstoffen.

In der Literatur sind zahlreiche geeignete Einzelfarbstoffe beschrieben. So sind auch häufig Azofarbstoffe genannt worden (R.H. Cox : Mol. Crystals Liquid Crystals, 1979, S. 1-32).

Diese Azofarbstoffe weisen im allgemeinen einen hohen Ordnungsgrad auf. Jedoch sind die Farbstärken selten ausreichend, und regelmäßig ist die Lichtechtheit zu niedrig. Als Folge dieser Erkenntnis hat sich der Schwerpunkt der Entwicklung brauchbarer Farbstoffe auf die Stoffklasse der Anthrachinone verlagert (siehe z. B. DE-OS 3 028 593, DE-OS 3 009 974, DE-OS 3 006 744).

Aus der DE-A-2 627 215 sind dichroitische Trisazofarbstoffe bekannt, welche Phenylenreste, jedoch keinen Biphenylylenrest, in linearer Anordnung enthalten.

Überraschenderweise wurde nun gefunden, daß sich Azofarbstoffe der Formel (I) eignen,

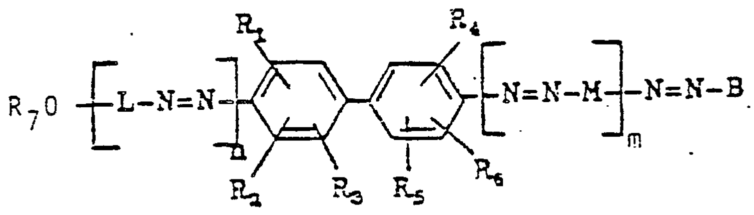

(I)

in der

L, M einen gegebenenfalls substituierten 1,4-Phenylen- oder einen gegebenenfalls substituierten 1,4-Naphthylenrest,

B den Rest einer Kupplungskomponente,

$R_1$, $R_2$, $R_3$, $R_4$, $R_5$, $R_6$ Wasserstoff, Halogen, Trifluormethyl, Nitro, Alkyl, Alkoxy, Alkylcarbonyl, Alkylthio, Alkoxycarbonyl bezeichnen,

m, n 0, 1 oder 2, mit der Maßgabe, daß m + n 2 ist, bezeichnen,

wobei weiterhin

$R_7$ gegebenenfalls substituiertes Aralkyl bezeichnet, für den Einsatz in flüssigkristallinem Material eignen.

B steht bevorzugt für den Rest einer Kupplungskomponente der aromatischen oder heterocyclischen Reihe, besonders bevorzugt für einen Rest der Benzol-, Naphthalin- oder Pyrazolreihe.

Die Reste L und M können z. B. durch $R_1$, $—OCF_3$ und/oder $—SR_8$ substituiert sein.

Bevorzugt ist flüssigkristallines Material enthaltend eine Verbindung der Formel

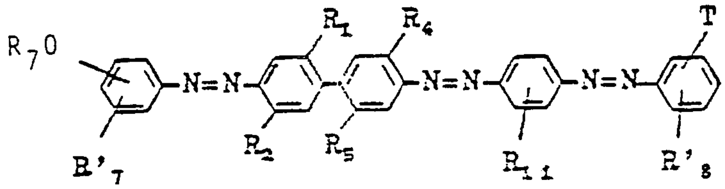

(II)

in der

$R'_7$, $R'_8$, $R_{11}$ Wasserstoff, Halogen, Cyan, Nitro, Alkyl, Alkoxy bezeichnen,

T für $—OR_8$, $—SR_8$ oder $NR_{81}R_8$ steht,

$R_8$, $R_{81}$ Wasserstoff, gegebenenfalls durch 1-3 nicht nachbarständige 0-Atome unterbrochenes Alkyl, Cycloalkyl, Aryl, Aralkyl, wobei die für $R_8$, $R_{81}$ genannten Kohlenwasserstoffreste substituiert sein

können, bezeichnen, und im Falle von $—NR_{81}R_8$, $R_{81}$ und $R_8$ zusammen unter Einschluß des N-Atoms einen 5-8-gliedrigen Ring bilden können.

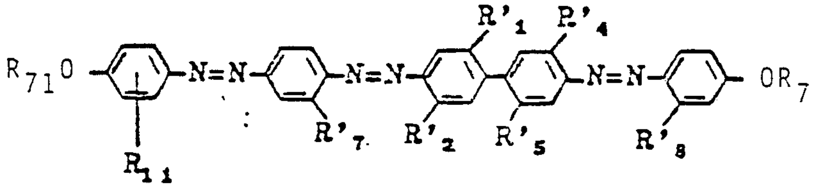

(III)

in der

$R'_1$, $R'_2$, $R'_4$, $R'_5$ Chlor, $C_1$-$C_{10}$-Alkyl, insbesondere Methyl und $C_1$-$C_{10}$-Alkoxy, insbesondere Methoxy, bezeichnen und

$R_{71}$ für gegebenenfalls substituiertes Aralkyl steht.

In den Substituenten der Formeln (I) und (II) bezeichnen Halogen vorzugsweise Chlor, Brom und Fluor, Alkyl vorzugsweise $C_1$-$C_6$-Alkyl, Alkoxy vorzugsweise $C_1$-$C_6$-Alkoxy, Alkylcarbonyl vorzugsweise ($C_1$-$C_6$-Alkyl)-carbonyl, Alkoxycarbonyl vorzugsweise ($C_1$-$C_6$-Alkoxy)-carbonyl.

$R_7$, $R_{71}$ stehen bevorzugt für gegebenenfalls substituiertes Benzyl.

$R_8$, $R_{81}$ stehen bevorzugt für Wasserstoff, $C_1$-$C_6$-Alkyl, Cyclopentyl, Cyclohexyl, Phenyl, Naphthyl, Benzyl, Phenethyl, wobei die genannten Kohlenwasserstoffreste substituiert sein können sowie für Aryl.

Besonders bevorzugt eingesetzt werden Verbindungen der Formel

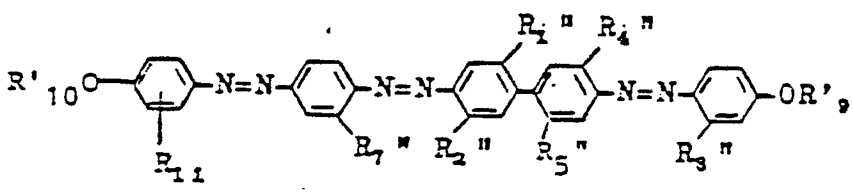

(IV)

in der

$R_1''$, $R_2''$, $R_4''$, $R_5''$ Halogen, insbesondere Chlor, Wasserstoff, $C_1$-$C_4$-Alkyl, insbesondere Methyl, oder $C_1$-$C_4$-Alkoxy, insbesondere Methoxy bezeichnen, und

$R'_9$, $R'_{10}$ Benzyl, das im Phenylkern, vorzugsweise in der 4-Stellung, durch Halogen, insbesondere Chlor, Nitro, $C_1$-$C_4$-Alkyl insbesondere Methyl, $C_1$-$C_4$-Alkoxy, insbesondere Methoxy substituiert sein kann und

$R_7''$, $R_8''$ für Wasserstoff, Halogen, insbesondere Chlor, $C_1$-$C_4$-Alkyl, insbesondere Methyl und $C_1$-$C_4$-Alkoxy, insbesondere Methoxy stehen.

Ganz besonders bevorzugt eingesetzt werden Verbindungen der Formel (IV), bei denen $R_1'' = R_5''$ und/oder $R_2'' = R_4''$ sind.

Weiterhin bevorzugt eingesetzt werden Verbindungen der Formel

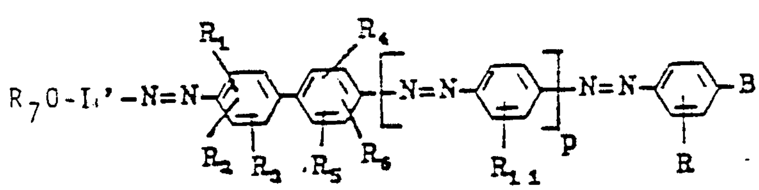

(V)

in der

L' einen gegebenenfalls durch $R_1$, $—OCF_3$ und/oder $—SR_8$, —OH oder $—NH_2$ substituierten 1,4-Phenylen- oder 1,4-Naphthylenrest, wobei die OH— oder $—NH_2$-Gruppen vorzugsweise in o-Position zur Azobrücke stehen,

R $R_1$, $—OCF_3$ oder $—SR_8$ und

P 1 oder 2 bezeichnen.

Bevorzugt sind weiterhin Farbstoffe der Formel

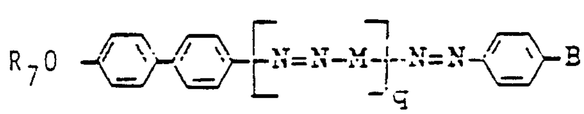

(VI)

in der q für 2 steht.

Von besonderem Interesse sind schließlich Farbstoffe der Formel

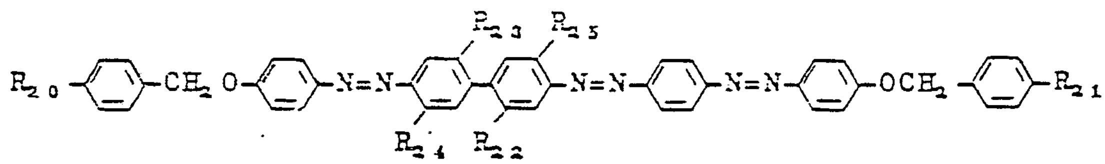

(VII)

in der $R_{20}$, $R_{21}$, H, $-CH_3$, $-NO_2$, $-Cl$ und $R_{22}$, $R_{23}$, $R_{24}$, $R_{25}$ H, $-CH_3$, $-Cl$, $-NO_2$ bezeichnen.

Die Erfindung betrifft weiterhin Azofarbstoffe der Formeln (I)-(VII).

Diese neuen Farbstoffe lassen sich in Analogie zu literaturbekannten Farbstoffen herstellen. Die bei der üblichen Synthese durch Diazotierung und Kupplung anfallenden Farbstoffe der Formel (I) sind in der Regel für den Einsatz in Displays nicht rein genug. Vielmehr hat es sich als zweckmäßig erwiesen, sie durch chromatographische Verfahren, vorzugsweise Säulen- oder Verteilungschromatographie, zu reinigen.

Die erfindungsgemäßen Farbstoffe lassen sich in flüssigkristallinen Materialien gelöst verwenden. Bevorzugt ist der Einsatz in Mischungen von Farbstoffen. Als flüssigkristalline Materialien kommen besonders solche mit positiver dielektrischer Anisotropie in Betracht. Die Zahl der Mischungsvarianten ist groß. Beispielsweise seien Mischungen von 4(4-Cyano-phenyl)-alkylcyclohexanen genannt, wobei Alkyl Propyl- (25 %), n-Pentyl- (37 %) und n-Heptyl- (25 %) bedeutet und als zusätzliche Komponente 4(4'-Cyanobiphenyl)-n-pentylcyclohexan (12 %) verwendet wird, oder Mischungen von 4(4'-Cyanobiphenyl)-alkyl- und -alkoxy-Verbindungen, beispielsweise mit der Bedeutung n-Pentyl- (53 %), n-Heptyl- (25 %) für Alkyl und Octyloxy- (14 %) für Alkoxy und 4(4'-Cyano-terphenyl)-alkylverbindungen, z. B. n-Pentyl- (8 %) für Alkyl. Gleichfalls geeignet sind Mischungen, die 4-Cyanophenyl-pyrimidine enthalten. Das flüssigkristalline Material enthält die Farbstoffe gemäß Formel I vorzugsweise zu etwa 0,01 bis etwa 30 Gew.-%, besonders bevorzugt zu etwa 0,5 bis etwa 5 Gew.-%.

Die in den flüssigkristallinen Materialien gelösten Farbstoffe und ihre Mischungen mit anderen Farbstoffen, insbesondere mit Anthrachinonfarbstoffen, lassen sich in opto-elektronischen Anzeigen verwenden.

## Beispiel 1

31 g technisch reines 4,4'-Diamino-2,2'-dimethylbiphenylsulfat werden in 15 ml konz. Salzsäure und 150 ml Wasser bei 50 °C verrührt. Man setzt 25 ml konz. Salzsäure nach und diazotiert bei 0-5 °C mit 7 g Natriumnitrit in 50 ml Wasser. Das Diazoniumsalz kuppelt man auf Anilinomethansulfonsäure bei pH 1-2 und saugt nach 2,5 h vom ausgefallenen Niederschlag ab.

Die Paste wird mit Wasser gewaschen und durch Kochen mit 10 % Sodalösung gespalten, was nach 90 min beendet ist. Der ausgefallene gelbe Farbstoff wird abgesaugt und mit Wasser neutral gewaschen. 31,5 g dieses Produktes werden in 130 ml Dimethylformamid und 80 ml konz. Salzsäure gelöst und mit 10,5 g Natriumnitrit in 40 ml Wasser diazotiert. Nach der Zerstörung des Nitritüberschusses gibt man 14 g Phenol in die Lösung und stellt den pH auf 8-9. Nach 2 h wird abgesaugt und der Niederschlag mit Methanol ausgekocht und heiß filtriert. Aus dem Filtrat erhält man 4 g Farbstoff, der in 70 ml Methylethylketon mit 1 g Pottasche, 20 g Chlormethylbenzol und einer Spatelspitze Jod 5 h bei 89-90 °C verethert wird. Das Reaktionsprodukt gibt man auf Wasser, saugt der Niederschlag ab und chromatographiert diesen an einer Säule aus Kieselgel mit einer Mischung von Methylenchlorid/Methanol 20 : 1 als Elutionsmittel.

Man erhält zwei isomere Farbstoffe der gleichen Bruttozusammensetzung $C_{46}H_{36}N_6O_2$, von denen der zuerst eluierte einen Ordnungsgrad S von 0,76 und ein Absorptionsmaximum bei 393 nm, der zweite einen Ordnungsgrad S von 0,73 und ein Absorptionsmaximum bei 395 aufweisen.

Zur Feststellung des Ordnungsgrades wird der Farbstoff in einer nematischen Phase (TNC 1132 Fa. Merck), die ein Gemisch von substituierten Phenylcyclohexanen darstellt, gelöst und der Dichroismus gemessen. Hierzu wird die Lösung in eine Zelle gefüllt, deren Wände mit einer Orientierungsschicht versehen sind und die planparallel im Abstand von 20 μ liegen. Die Absorption wird mit polarisiertem Licht gemessen, wobei das Polarisationsfilter so eingestellt wird, daß maximale Absorption erfolgt (A∥) zu diesem Meßwert nun die minimale Absorption durch Drehen des Filters um 90° erzeugt (A⊥). Der Ordnungsgrad wird nach der bekannten Beziehung

$$S = \frac{(A\parallel/A\perp) - 1}{(A\parallel/A\perp) + 2}$$

berechnet.

Beispiel 2

Verwendet man an Stelle von 2,2'-Dimethyl-4,4'-diamino-diphenyl in Beispiel 1 die folgenden Diamine

a) 2,2'-Dichlor-4,4'-diaminodiphenyl
b) 3,3'-Dichlor-4,4'-diaminodiphenyl
c) 3-Methyl-4,4'-diaminodiphenyl
d) 3,3'-Dimethyl-4,4'-diaminodiphenyl und
e) 3-Nitro-4,4'-diaminodiphenyl,

so erhält man folgende Farbstoffe, welche die angegebenen Ordnungsgrade haben :

<u>S</u>

a) 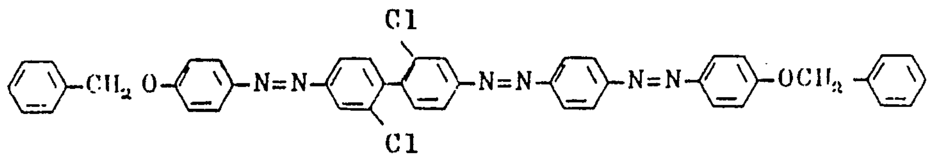 0,76

b) 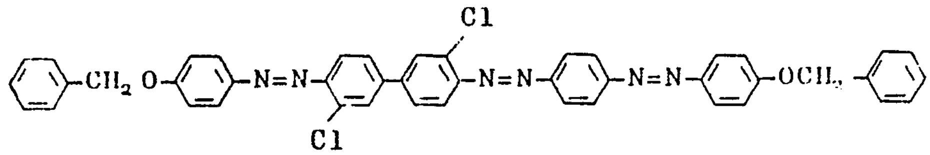 0,74

c) 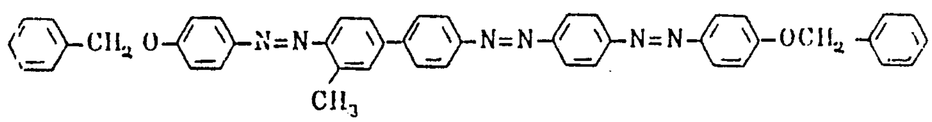 0,76

d) 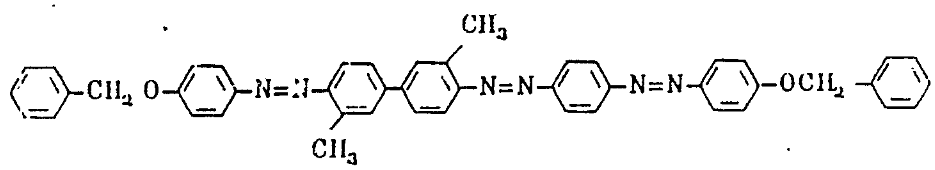 0,75

e) 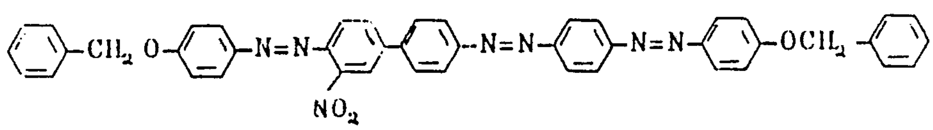 0,72

Beispiel 3

Verwendet man an Stelle von Chlormethylbenzol in Beispiel 1 die folgenden Verbindungen

a) 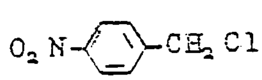

b) 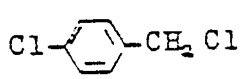

c) 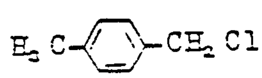

so erhält man die folgenden Farbstoffe, deren Ordnungsgrade (S) angegeben sind :

a) 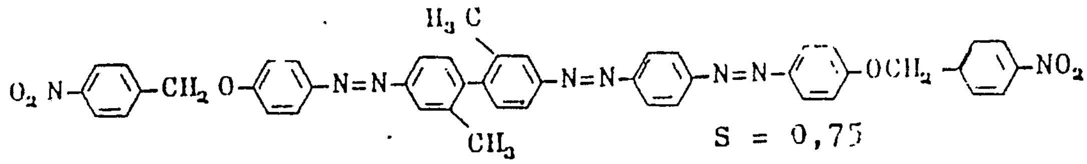

S = 0,75

b) 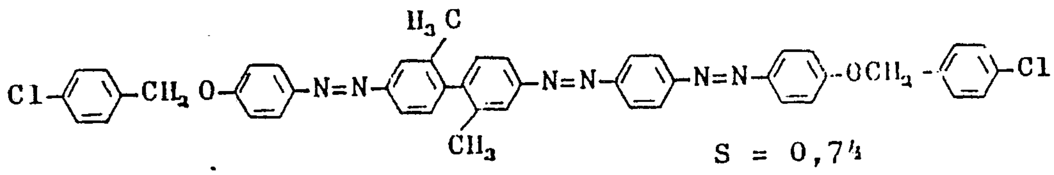

S = 0,74

c) 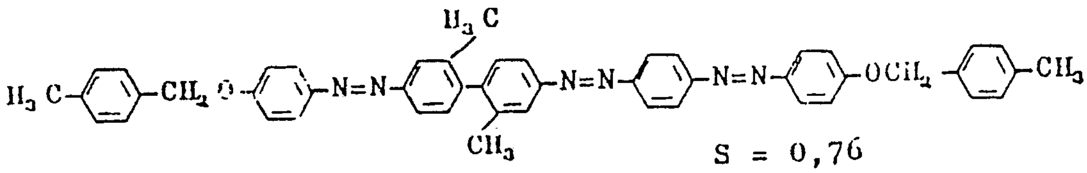

S = 0,76

**Patentansprüche**

1. Flüssigkristallines Material enthaltend einen Azofarbstoff der Formel

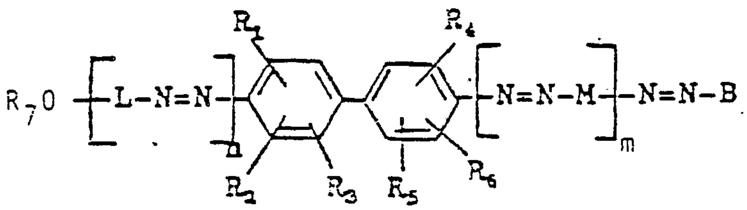

(I)

in der

L, M einen gegebenenfalls substituierten 1,4-Phenylen- oder einen gegebenenfalls substituierten 1,4-Naphthylenrest,

B den Rest einer Kupplungskomponente,

$R_1$, $R_2$, $R_3$, $R_4$, $R_5$, $R_6$ Wasserstoff, Halogen, Trifluormethyl, Nitro, Alkyl, Alkoxy, Alkylcarbonyl, Alkylthio, Alkoxycarbonyl,

m, n 0, 1 oder 2, mit der Maßgabe, daß m + n 2 ist, bezeichnen,

wobei weiterhin $R_7$ gegebenenfalls substituiertes Aralkyl bezeichnet.

2. Flüssigkristallines Material enthaltend einen Farbstoff der Formel

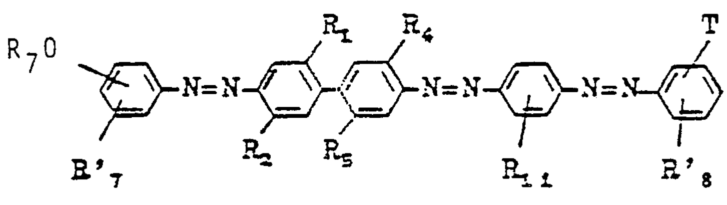

(II)

in der

$R'_7$, $R'_8$, $R_{11}$ Wasserstoff, Halogen, Cyan, Nitro, Alkyl, Alkoxy bezeichnen und

T für $—OR_8$, $—SR_8$ oder $—NR_{81}R_8$ steht,

$R_8$, $R_{81}$ Wasserstoff, gegebenenfalls durch 1-3 nicht nachbarständige 0-Atome unterbrochenes Alkyl, Cycloalkyl, Aryl, Aralkyl, wobei die für $R_8$, $R_{81}$ genannten Kohlenwasserstoffreste substituiert sein können, bezeichnen, und im Falle von $—NR_{81}R_8$, $R_{81}$ und $R_8$ zusammen einen 5-8-gliedrigen Ring bilden können und

$R_1$, $R_2$, $R_4$, $R_5$, $R_7$ die zu Formel (I) angegebenen Bedeutungen haben.

3. Flüssigkristallines Material enthaltend einen Azofarbstoff der Formel

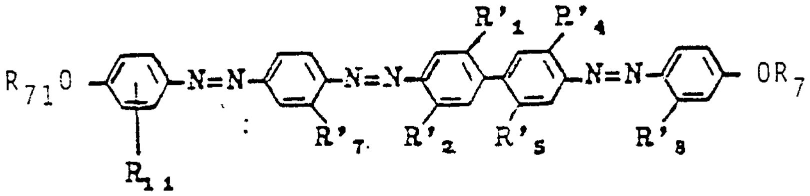

(III)

in der

$R'_1$, $R'_2$, $R'_4$, $R'_5$ Chlor $C_1$-$C_{10}$-Alkyl, insbesondere Methyl und $C_1$-$C_{10}$-Alkoxy, insbesondere Methoxy bezeichnen und

$R_7$, $R_{71}$ gegebenenfalls substituiertes Aralkyl und

$R'_7$, $R'_8$, $R_{11}$ die zu Formel (II) angegebenen Bedeutungen haben.

4. Flüssigkristallines Material enthaltend einen Azofarbstoff der Formel

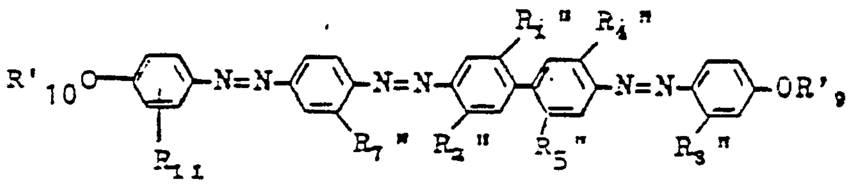

(IV)

in der

$R_1''$, $R_2''$, $R_4''$, $R_5''$ Halogen, insbesondere Chlor, Wasserstoff, $C_1$-$C_4$-Alkyl, insbesondere Methyl oder $C_1$-$C_4$-Alkoxy, insbesondere Methoxy bezeichnen,

$R'_9$, $R'_{10}$ für Benzyl, das im Phenylkern, vorzugsweise in der 4-Stellung, durch Halogen, insbesondere Chlor, Nitro, $C_1$-$C_4$-Alkyl, insbesondere Methyl, $C_1$-$C_4$-Alkoxy, insbesondere Methoxy, substituiert sein kann, stehen,

$R_7''$, $R_8''$ Wasserstoff, Halogen, insbesondere Chlor, $C_1$-$C_4$-Alkyl, insbesondere Methyl und $C_1$-$C_4$-Alkoxy, insbesondere Methoxy bezeichnen und

$R_{11}$ die zu Formel (II) angegebenen Bedeutungen hat.

5. Flüssigkristallines Material enthaltend einen Farbstoff der Formel

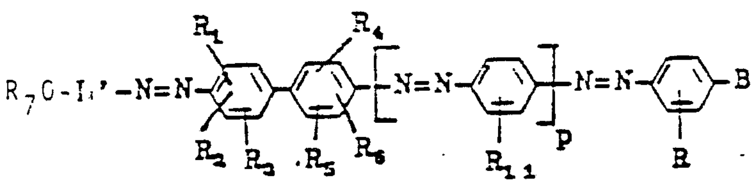

(V)

in der

L' einen gegebenenfalls durch $R_1$, $—OCF_3$ und/oder $—SR_8$, —OH oder $—NH_2$ substituierten 1,4-Phenylen- oder 1,4-Naphthylenrest, wobei die —OH— oder $—NH_2$-Gruppen vorzugsweise in o-Position zur Azobrücke stehen,

R $R_1$, $—OCF_3$ oder $—SR_8$ und

P 1 oder 2 bezeichnen und

$R_1$, $R_2$, $R_3$, $R_4$, $R_5$, $R_6$, $R_7$, B, X die zu Formel (I) und

$R_8$, $R_{11}$ die zu Formel (II) angegebenen Bedeutungen haben.

6. Flüssigkristallines Material enthaltend einen Azofarbstoff der Formel

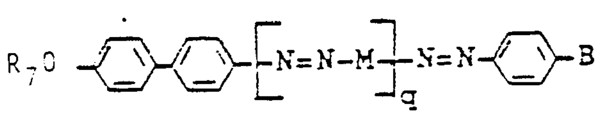

(VI)

in der

M, B, $R_7$ die zu Formel (I) angegebenen Bedeutungen haben und

q für 2 steht.

7. Flüssigkristallines Material gemäß den Ansprüchen 1-6 enthaltend Gemische verschiedener Farbstoffe.

8. Flüssigkristallines Material gemäß den Ansprüchen 1-7, enthaltend etwa 0,01 bis etwa 30 Gew.-%, insbesondere 0,5-5 Gew.-% Farbstoff oder Farbstoffgemisch.

9. Azofarbstoffe gemäß den Formeln (I)-(VI).

**Claims**

1. Liquid-crystal material containing an azo dyestuff of the formula

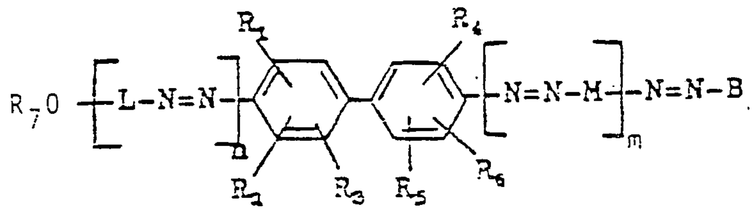

(I)

in which

L and M designate an optionally substituted 1,4-phenylene or an optionally substituted 1,4-naphthylene radical,

B designates the radical of a coupling component, $R_1$, $R_2$, $R_3$, $R_4$, $R_5$ and $R_6$ designate hydrogen, halogen, trifluoromethyl, nitro, alkyl, alkoxy, alkylcarbonyl, alkylthio or alkoxycarbonyl and

m and n designate 0, 1 or 2, with the proviso that m + n is 2, wherein, furthermore, $R_7$ designates optionally substituted aralkyl.

2. Liquid-crystal material containing a dyestuff of the formula

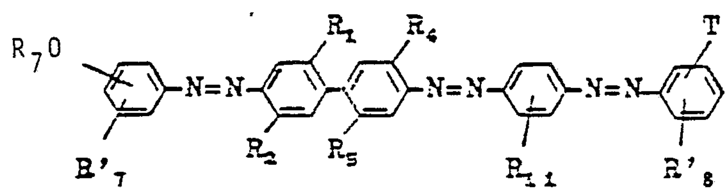

(II)

in which

$R'_7$, $R'_8$ and $R_{11}$ designate hydrogen, halogen, cyano, nitro, alkyl or alkoxy and

T represents $—OR_8$, $—SR_8$ or $—NR_{81}R_8$,

$R_8$ and $R_{81}$ designate hydrogen, or alkyl, cycloalkyl, aryl or aralkyl, which are optionally interrupted by 1-3 non-adjacent 0 atoms, it being possible for the hydrocarbon radicals mentioned for $R_8$ and $R_{81}$ to be substituted, and in the case of $—NR_{81}R_8$, $R_{81}$ and $R_8$ can together form a 5-8-membered ring and

$R_1$, $R_2$, $R_4$, $R_5$ and $R_7$ have the meanings given under formula (I).

3. Liquid-crystal material containing an azo dyestuff of the formula

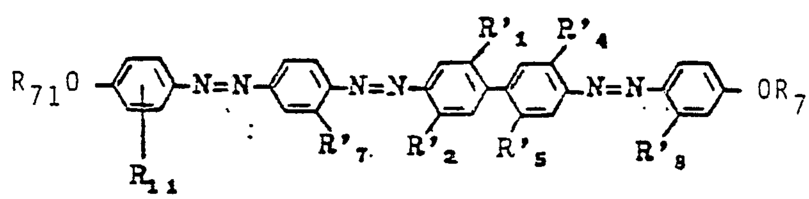

(III)

in which

$R'_1$, $R'_2$, $R'_4$ and $R'_5$ designate chlorine, $C_1$-$C_{10}$-alkyl, in particular methyl and $C_1$-$C_{10}$-alkoxy, in particular methoxy and

$R_7$ and $R_{71}$ optionally substituted aralkyl and

$R'_7$, $R'_8$ and $R_{11}$ have the meanings given under formula (II).

4. Liquid-crystal material containing an azo dyestuff of the formula

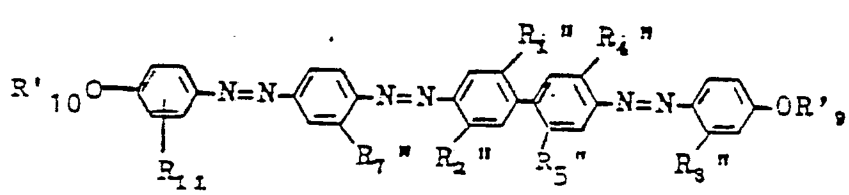

(IV)

in which

$R_1''$, $R_2''$, $R_4''$ and $R_5''$ designate halogen, in particular chlorine, hydrogen, $C_1$-$C_4$-alkyl, in particular methyl or $C_1$-$C_4$-alkoxy, in particular methoxy,

$R'_9$ and $R'_{10}$ represent benzyl which can be substituted in the phenyl nucleus, preferably in the 4-position, by halogen, in particular chlorine, nitro, $C_1$-$C_4$-alkyl in particular methyl, or $C_1$-$C_4$-alkoxy, in particular methoxy,

$R_7''$ and $R_8''$ designate hydrogen, halogen, in particular chlorine, $C_1$-$C_4$-alkyl, in particular methyl and $C_1$-$C_4$-alkoxy, in particular methoxy and

$R_{11}$ has the meanings given under formula (II).

5. Liquid-crystal material containing a dyestuff of the formula

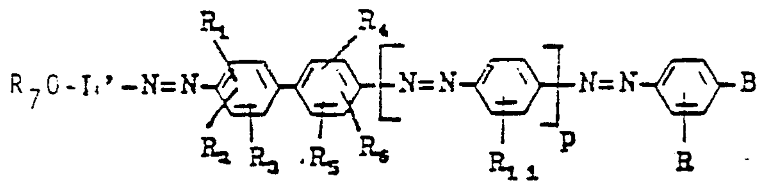 (V)

in which

L′ designates a 1,4-phenylene or 1,4-naphthylene radical which is optionally substituted by $R_1$, $—OCF_3$ and/or $—SR_8$, —OH or $—NH_2$, the —OH or $—NH_2$ groups preferably being in the o-position to the azo bridge,

R designates $R_1$, $—OCF_3$ or $—SR_8$ and

p designates 1 or 2 and

$R_1$, $R_2$, $R_3$, $R_4$, $R_5$, $R_6$, $R_7$, B and X have the meanings given under formula (I) and

$R_8$ and $R_{11}$ have those given under formula (II).

6. Liquid-crystal material containing an azo dyestuff of the formula

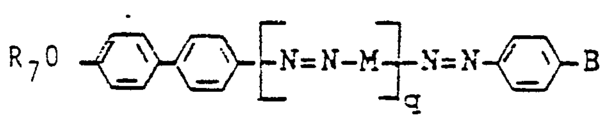 (VI)

in which

M, B and $R_7$ have the meanings given under formula (I) and q represents 2.

7. Liquid-crystal material according to Claims 1-6 containing mixtures of various dyestuffs.

8. Liquid-crystal material according to Claims 1-7, containing about 0.01 to about 30 % by weight, in particular 0.5-5 % by weight of a dyestuff or dyestuff mixture.

9. Azo dyestuffs according to formulae (I)-(VI).

**Revendications**

1. Matière à cristallinité liquide contenant un colorant azoïque de formule

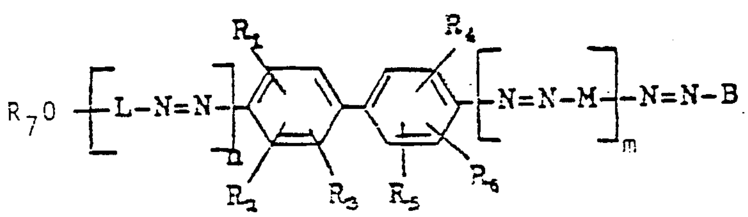 (I)

dans laquelle

L, M représentent un reste 1,4-phénylène éventuellement substitué ou un reste 1,4-naphthylène éventuellement substitué,

B est le reste d'un copulant,

$R_1$, $R_2$, $R_3$, $R_4$, $R_5$, $R_6$ représentent l'hydrogène, un halogène, un groupe trifluorométhyle, nitro, alkyle, alkoxy, alkylcarbonyle, alkylthio, alkoxycarbonyle,

m, n ont la valeur 0, 1 ou 2, à condition que la somme m + n soit égale à 2.

$R_7$ représentant en outre un groupe aralkyle éventuellement substitué.

2. Matière à cristallinité liquide contenant un colorant de formule

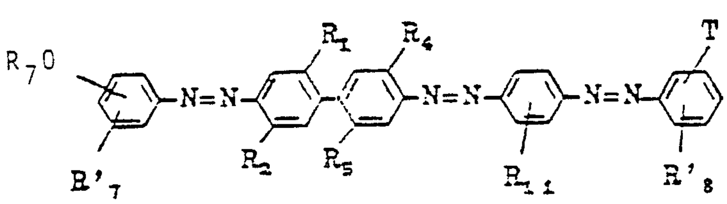 (II)

dans laquelle

$R'_7$, $R'_8$, $R_{11}$ représentent l'hydrogène, un halogène, un groupe cyano, nitro, alkyle, alkoxy et est un groupe $—OR_8$, $—SR_8$ ou $—NR_{81}R_8$,

$R_8$, $R_{81}$ représentent l'hydrogène, un groupe alkyle éventuellement interrompu par 1 à 3 atomes d'oxygène non voisins, un groupe cycloalkyle, un groupe aryle, un groupe aralkyle, les restes hydrocarbonés mentionnés pour $R_8$, $R_{81}$ pouvant être substitués, et dans le cas de $—NR_{81}R_8$, $R_{81}$ et $R_8$ peuvent former ensemble un noyau de 5 à 8 chaînons et

$R_1$, $R_2$, $R_4$, $R_5$, $R_7$ ont les définitions indiquées à propos de la formule (I).

3. Matière à cristallinité liquide contenant un colorant azoïque de formule

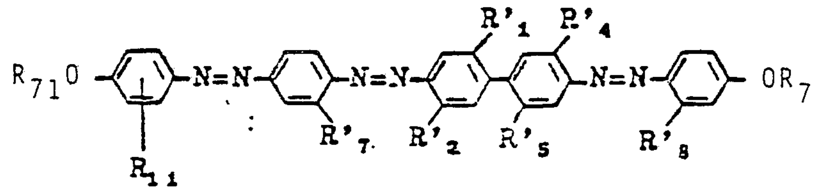

(III)

dans laquelle

$R'_1$, $R'_2$, $R'_4$, $R'_5$ représentent le chlore, un groupe alkyle en $C_1$ à $C_{10}$, notamment méthyle, et un groupe alkoxy en $C_1$ à $C_{10}$, notamment méthoxy et

$R_7$, $R_{71}$ représentent un groupe aralkyle éventuellement substitué et

$R'_7$, $R'_8$, $R_{11}$ ont les définitions indiquées à propos de la formule (II).

4. Matière à cristallinité liquide contenant un colorant azoïque de formule

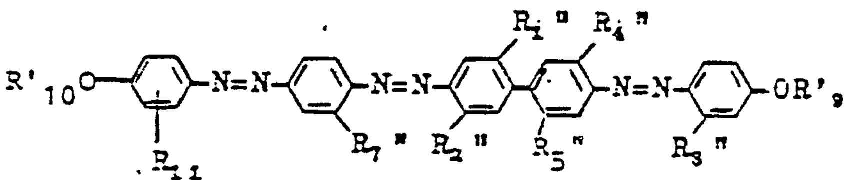

(IV)

dans laquelle

$R_1''$, $R_2''$, $R_4''$, $R_5''$ représentent un halogène, notamment le chlore, l'hydrogène, un groupe alkyle en $C_1$ à $C_4$, notamment méthyle ou un groupe alkoxy en $C_1$ à $C_4$, notamment méthoxy,

$R'_9$, $R'_{10}$ représentent un groupe benzyle qui peut être substitué dans le noyau phényle, de préférence en position 4, par un halogène, notamment le chlore, un groupe nitro, alkyle en $C_1$ à $C_4$, notamment méthyle, alkoxy en $C_1$ à $C_4$, notamment méthoxy,

$R_7''$, $R_8''$ représentent l'hydrogène, un halogène, notamment le chlore, un groupe alkyle en $C_1$ à $C_4$, notamment méthyle, et un groupe alkoxy en $C_1$ à $C_4$, notamment méthoxy et

$R_{11}$ a les définitions indiquées à propos de la formule (II)

5. Matière à cristallinité liquide contenant un colorant de formule

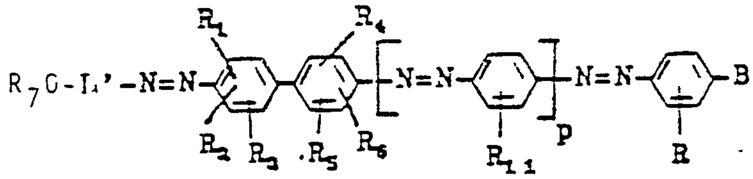

(V)

dans laquelle

L' est un reste 1,4-phénylène ou 1,4-naphtylène éventuellement substitué par un substituant $R_1$, $—OCF_3$ et/ou $—SR_8$, $—OH$ ou $—NH_2$, les groupes $—OH$ et $—NH_2$ étant de préférence en position ortho par rapport au pont azo,

R représente $R_1$, $—OCF_3$ ou $—SR_8$ et

p a la valeur 1 ou 2 et

$R_1$, $R_2$, $R_3$, $R_4$, $R_5$, $R_6$, $R_7$, B, X ont les définitions données à propos de la formule (I) et

$R_8$, $R_{11}$ ont les définitions données à propos de la formule (II).

6. Matière à cristallinité liquide contenant un colorant azoïque de formule

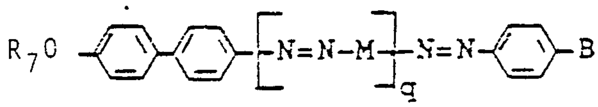

(VI)

dans laquelle

M, B, $R_7$ ont les définitions données à propos de la formule (I) et

q a la valeur 2.

7. Matière à cristallinité liquide suivant les revendications 1 à 6, contenant des mélanges de différents colorants.

8. Matière à cristallinité liquide suivant les revendications 1 à 7, contenant environ 0,01 à environ 30 % en poids, notamment 0,5 à 5 % en poids, de colorant ou de mélange de colorants.

9. Colorants azoïques répondant aux formules (I)-(VI).